# FASCICULE DE BREVET EUROPEEN

(11) **EP 0 605 406 B1**
(45) Date de publication et mention de la délivrance du brevet: **27.01.1999**
(21) Numéro de dépôt: 94400571.9
(22) Date de dépôt: 02.10.1991
(51) Int. Cl.: A61D 19/02

(54) **Sonde d'insémination**
Besamungssonde
Insemination probe

(30) Priorité: 09.10.1990 FR 9012427
(43) Date de publication de la demande: 06.07.1994
(62) Demande divisionnaire de: 91402627.3
(73) Titulaire: IMV S.A., 61300 L'Aigle (FR)
(72) Inventeur: Cassou, Robert, 61300 L'Aigle (FR); Cassou, Maurice, 61300 L'Aigle (FR); Cassou, Bertrand, 61300 L'Aigle (FR)
(74) Mandataire: Dorland, Anne-Marie

(56) Documents cités:
- EP-A- 0 148 473
- DE-A- 2 701 998
- FR-A- 2 524 303
- PORC MAGAZINE Juillet '89, no. 214, page 62.

## Description

L'invention concerne l'insémination artificielle des animaux et plus précisément une sonde d'insémination destinée à être adaptée à un sachet-dose pour semence animale, plus particulièrement pour l'insémination des porcins.

L'insémination artificielle des porcins exige une quantité de semence de l'ordre de 125 cm³. La semence est transférée dans le vagin de la truie par l'intermédiaire d'une sonde d'insémination adaptée à un orifice d'un récipient contenant cette dose de semence.

Ces récipients existent à l'heure actuelle sous plusieurs formes différentes.

Par exemple, les doses peuvent être contenues dans un flacon, réalisé par extrudogonflage, en matière thermoplastique souple ou semi-rigide à soufflet, destiné à être fermé par un bouchon moulé vissable et adapté à recevoir une canule de raccordement ; un tel flacon pèse environ une quinzaine à une vingtaine de grammes.

Le conditionnement de ces flacons, après une distribution manuelle, peut être effectué soit également manuellement par gravité à partir d'une vanne disposée à la base d'une réserve de semence, ou semi-automatiquement au moyen d'une pompe péristaltique délivrant le volume de semence prédéterminé ; la fermeture du flacon est manuelle par simple vissage du bouchon.

On connaît également des récépients souples de forme générale tronconique réalisés aussi en matière thermoplastique par extrudogonflage ; ces récipients comportent une canule incorporée ; le fond, initialement ouvert, est scellé par soudure après remplissage ; leur poids est inférieur à 10g.

Avant conditionnement, ces récipients tronconiques sont emboîtés l'un dans l'autre à mi-hauteur, ce qui diminue l'encombrement et facilite la distribution ; cette distribution est semi-automatique : les tubes étant disposés emboîtés par quantités et placés verticalement dans les distributeurs, manuellement, fond ouvert vers le haut, le remplissage du récipient supérieur est effectué au moyen d'une pompe péristaltique, puis l'on procède par pincement et soudure de la paroi supérieure, à un scellement qui est automatique. Le fait que le tube soit ouvert et que le remplissage soit effectué par écoulement vertical à l'air libre expose la semence diluée aux contaminations.

Il existe aussi des récipients sous la forme de sachets souples individuels comportant un embout en tube souple rapporté soudé.

Cette technique grève assez sensiblement le prix de revient et ne permet pas d'automatisation. En effet, avec les sachets souples connus et leurs tubes souples rapportés soudés, la distribution ne peut guère être que manuelle ; le remplissage, s'il est effectué par gravité, est lui-même manuel et dans ce cas fort lent ; si le remplissage est effectué au moyen d'une pompe péristaltique, il est semi-automatique mais de toute manière le scellement par soudure du sachet sous forme de tube souple ou l'obturation de ce sachet par un bouchon est également manuel.

L'utilisation des pompes péristaltiques a pour inconvénient que celles-ci laminent une proportion non négligeable des spermatozoïdes.

Dans tous les cas, flacons à vis souples ou semi-rigides à soufflet, récipients tronconiques souples ou sachets, la canule, l'embout ou le conduit normalement obturés sont ouverts par découpe de l'extrémité bouchée, avant leur raccordement sur la sonde d'insémination. L'étanchéité et le maintien sont obtenus par emboîtement serré interne ou externe de la canule ou de l'embout issu de la dose sur l'extrémité libre de la sonde d'insémination.

Dans le cas des flacons et des récipients tronconiques souples, l'expulsion de la semence diluée s'effectue par pression de la main et écrasement progressif. Pour obtenir un vidage complet, deux opérations avec reprise d'air sont nécessaires.

Dans le cas des sachets, le vidage est naturel par action combinée de la pression atmosphérique, du tractus génital de la truie, et du sachet dont l'état initial est plat sans volume réservé et sans contrainte du remplacement d'un volume de liquide par le même volume d'air.

Les sondes d'insémination destinées à être adaptées à ces récipients sont extrêmement variées.

La plupart de ces sondes, tubulaires, ont une forme générale cylindrique à section droite circulaire et présentent un diamètre extérieur de 5 à 14 mm et un diamètre intérieur de 3 à 6 mm. L'une des extrémités de la sonde est adaptée à la conformation des voies génitales de la truie ; l'autre extrémité est comme on l'a vu réalisée de manière à être adaptable par emboîtement avec la canule ou l'embout du récipient contenant la semence ; la longueur de ces sondes est de l'ordre d'une cinquantaine de centimètres. L'extrémité destinée à être introduite dans le vagin de la truie, dite "extrémité fonctionnelle", se présente généralement sous la forme d'un moulage de caoutchouc ou d'élastomère présentant une sorte de pas de vis à gauche, ou encore d'un moulage d'un tampon mousse souple.

Une telle sonde comportant les caracteristiques du préambule de la revendication 1 est notamment décrite dans l'article "IMV : 20 000 sondes-mousse par jour pour le marché mondial" dans "Porc Magazine", n° 214, Juillet 1989. Cette sonde comprend un tube extrudé et un tampon surmoulé en mousse souple à l'extrémité du tube, sur une partie de sa longueur.

Sur cette base, il existe des sondes très élaborées, d'un prix élevé, destinées à des usages multiples pour des raisons de rentabilité et imposant à cette fin des lavages très soigneux sans que puissent être écartés complètement les risques de contamination; il existe également des sondes simples, du type jetable parce que fabriquées automatiquement avec un minimum de matière peu coûteuse, et dont le prix doit nécessairement être sensiblement inférieur au coût de relavage. Dans les deux cas, le conduit intérieur de la sonde est ouvert aux deux extrémités, ce qui pose des problèmes en ce qui concerne leur nécessaire maintien à l'état stérile.

L'invention a pour but de remédier aux inconvénients des techniques antérieures et plus particulièrement de créer une sonde à laquelle on puisse adapter un sachet-dose du type jetable présentant à vide un encombrement minimal, économique car fabriqué avec une faible quantité de matière plastique peu coûteuse au moyen d'une technique aisée et automatisable, de conception simple et sans tube de raccordement rapporté soudé, qui puisse être associé à d'autres sachets identiques dans une disposition en chapelet permettant une automatisation totale depuis la distribution des feuilles de matière plastique jusqu'à la fabrication du sachet et à son remplissage.

L'invention a également pour but de permettre l'adaptation d'un sachet-dose dont le remplissage soit rapide et automatique à l'abri de l'air et des contaminations, l'accouplement du sachet et de la sonde avant l'insémination avec un maintien et une étanchéité assurés de manière fiable, une obturation du conduit de la sonde aux deux extrémités limitant l'introduction de cellules étrangères dans l'utérus, et un vidage naturel du sachet complet à l'abri de l'air et des contaminations.

L'invention concerne donc une sonde d'insémination pour l'insémination artificielle animale, constituée d'un tube en matière thermoplastique semi-rigide portant à une de ses extrémités un tampon en mousse souple présentant une forme de révolution, ledit tampon comportant un conduit le traversant longitudinalement de part en part, caractérisée en ce que le tube est logé dans ledit conduit sur une partie de sa longueur et en ce que ledit conduit comporte dans sa partie située au-delà du tube une zone rétrécie.

Selon une caractéristique préférentielle de l'invention, le tube semi-rigide est en matière thermoplastique biodégradable.

D'autres caractéristiques et avantages de l'invention ressortiront de la description qui va suivre, donnée à titre d'exemple non limitatif en référence aux dessins annexés dans lesquels :

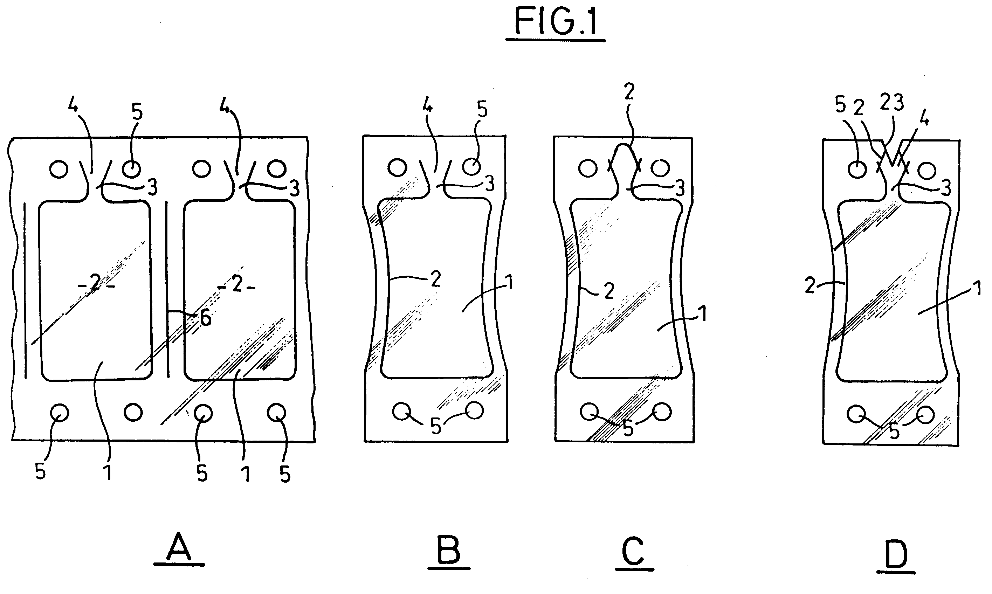

- les figures 1A, B, C, D sont des vues de face montrant les formes successives prises par un sachet-dose adaptable à une sonde selon l'invention de sa fabrication à son utilisation,

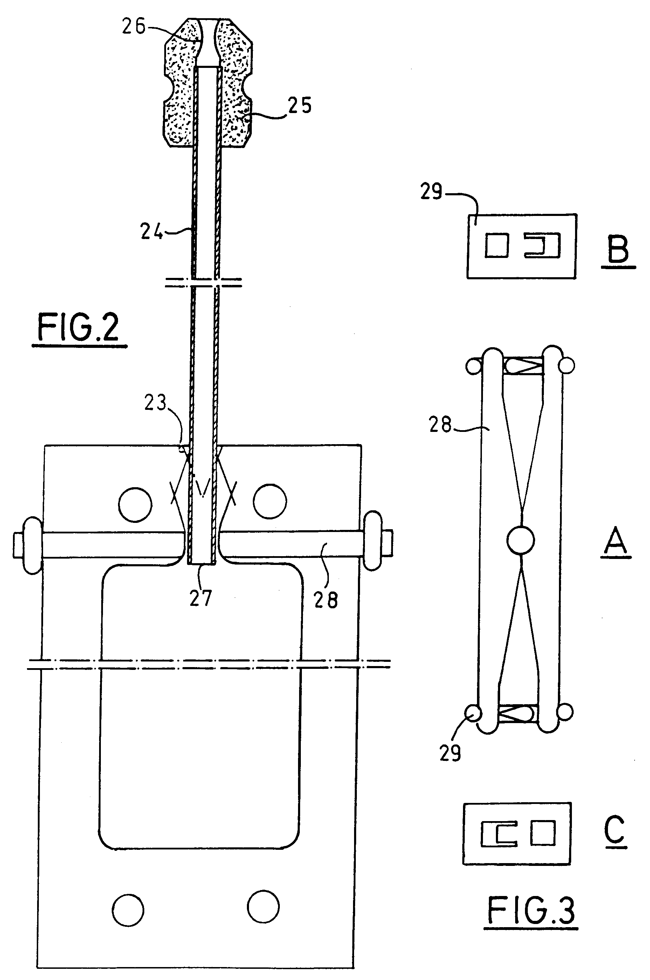

- la figure 2 est une vue schématique montrant le montage dans un sachet-dose, d'une sonde selon l'invention (représentée coupée), et
- les figures 3A, B et C montrent des moyens de maintien et d'étanchéité de la sonde dans le sachet-dose.

Les sachets-doses 1 sont destinés à défiler dans une machine de conditionnement sous la forme d'une bande présentant une succession de poches formées le long de cette bande initialement stockée en rouleau ; à cette fin, ils sont réalisés à partir de deux feuilles superposées de matière thermoplastique souple légère réunies par des cordons de soudure dont le tracé définissant la forme de la poche sera précisé dans la suite. Les feuilles souples et minces de matière thermoplastique sont des monocouches ou des complexes adaptés à la soudure thermique étanche, de préférence stérilisables par rayonnement gamma, indemnes de constituants migrants toxiques, imperméables à la lumière et aux rayons ultraviolets, et imprimables ; le poids unitaire d'un sachet est de 2,5g environ.

Tandis que les sachets ont à vide une forme rectangulaire, le cordon de soudure 2 s'étend de manière à déterminer un contour de poche de forme générale également rectangulaire mais dont l'un des petits côtés est interrompu, le cordon déterminant en partant de l'interruption un conduit 3 prolongé par un cône de centrage 4 allant en s'évasant ; les angles du rectangle sont arrondis.

Des trous 5 équidistants se succèdent à proximité des deux bords longitudinaux des bandes à l'extérieur du tracé fermé formé par le cordon de soudure.

Une prédécoupe 6 s'étendant seulement sur une partie de la largeur de la bande et déterminant la largeur du sachet rectangulaire, réalisée avant remplissage, permet lors de ce remplissage une modification locale de cette largeur et de l'épaisseur du sachet sans modification sensible des entraxes des trous 5 dans le sens longitudinal par rapport à la bande.

Le remplissage est effectué rapidement sous la double action de la gravité qui s'applique au liquide et de la dépression qui s'applique au sachet.

Un dispositif de soudure comprend deux mâchoires chauffantes réalisant le scellement du sachet par application de ces deux mâchoires chauffantes l'une contre l'autre au niveau du cône de centrage 4. Les mâchoires ont une forme en V renversé sécant avec le cône de centrage 4 de façon à faciliter ultérieurement l'ouverture du sachet par découpe et la mise en place de la sonde à travers cette découpe.

Le dispositif de soudure ferme donc par un segment de soudure en V renversé, le tracé du cordon initial délimitant la poche définie entre les deux feuilles souples, à l'extrémité libre évasée du cône de centrage.

Le sachet ainsi rempli en laboratoire, par la semance diluée, ici de la semence porcine, est distribué et expédié dans les élevages.

L'ouverture est pratiquée au moment de l'insémination par une découpe 23 effectuée par exemple aux ciseaux, découpe en forme de V dont les branches sont sécantes (approximativement perpendiculaires) aux branches du V renversé de la soudure fermant le cône de centrage 4 du sachet. Cette découpe 23 doit être juste suffisante pour le passage de la sonde.

La sonde selon l'invention, de type jetable, comporte un tube 24 en matière thermoplastique semi-rigide, de préférence biodégradable, de diamètre extérieur 7 mm et de diamètre intérieur 5 mm, et un tampon 25 de mousse de polyuréthane souple surmoulé autour d'une extrémité du tube et présentant une forme de révolution, constituant l'extrémité fonctionnelle de la sonde.

Le tampon 25 présente une longueur d'une trentaine de millimètres et un diamètre extérieur d'une vingtaine de millimètres ; son extrémité libre est tronconique avec un angle au sommet de 90 degrés environ ; il comporte, à mi-longueur, une gorge périphérique de section semi-circulaire ayant un diamètre d'environ 5 mm ; ce tampon entoure le tube 24 sur une vingtaine de millimètres à l'extrémité de celui-ci, et dépasse donc cette extrémité d'une dizaine de millimètres. De cette extrémité du tube à l'extrémité libre du tampon, ce dernier comporte un conduit rectiligne prolongeant le tube 24 dans l'axe longitudinal de celui-ci et présentant un rétrécissement 26 approximativement équidistant entre l'extrémité distale du tube 24 et sa propre extrémité libre ; à l'endroit du rétrécissement 26, le conduit présente une section droite circulaire ayant un diamètre de 3 mm environ, et ses parois sont, en section longitudinale, arrondies depuis l'extrémité du tube jusqu'à l'extrémité libre du tampon.

Ces caractéristiques donnent la possibilité au conduit intérieur du tampon de se refermer sous certaines conditions, grâce à la conjonction du choix de sa longueur notamment en prolongement du tube semi-rigide, du rétrécissement 26, et de la souplesse de la mousse.

L'utilisation du sachet-dose avec la sonde est extrêmement simple : après que l'opérateur ait incisé le sachet comme cela a déjà été mentionné et adapté la sonde dans l'incision, le volume d'air présent dans le sachet et dans le conduit de la sonde est chassé par pression sur le sachet ; le maintien en place de la colonne de liquide est effectué par application d'un doigt de l'opérateur à l'extrémité 27 du conduit qui est inséré dans le sachet, à travers la paroi souple de celui-ci ; l'isolement de la colonne de liquide est complété par la fermeture du conduit au niveau du tampon souple sous la pression des organes pendant la pénétration dans le vagin de l'animal ; l'ouverture du conduit est obtenue par une pression sur le sachet associée au tractus génital de la truie, capable de succion.

Le maintien en place de la sonde sur le sachet et l'étanchéité pendant l'insémination sont assurés au moyen d'un dispositif de pincement 28, 29 réutilisable représenté sur les figures 7A, 7B et 7C.

## Revendications

1. Sonde d'insémination pour l'insémination artificielle animale, constituée d'un tube (24) en matière thermoplastique semi-rigide portant à une de ses extrémités un tampon (25) en mousse souple présentant une forme de révolution, ledit tampon (25) comportant un conduit le traversant longitudinalement de part en part, caractérisée en ce que le tube (24) est logé dans ledit conduit sur une partie de sa longueur et en ce que ledit conduit comporte dans sa partie située au-delà du tube (24) une zone rétrécie (26).

2. Sonde d'insémination selon la revendication 1, caractérisée en ce que le conduit est rectiligne et prolonge le tube (24) dans l'axe longitudinal de celui-ci.

3. Sonde d'insémination selon l'une des revendications 1 et 2, caractérisée en ce que le tampon (25) est surmoulé autour d'une extrémité du tube (24).

4. Sonde d'insémination selon l'une quelconque des revendications 1 à 3, caractérisée en ce que le tampon a son extrémité libre tronconique.

5. Sonde d'insémination selon la revendication 4, caractérisée en ce que l'extrémité tronconique a un angle au sommet d'environ 90°.

6. Sonde d'insémination selon l'une quelconque des revendications 1 à 5, caractérisée en ce que la mousse souple du tampon est de la mousse de polyuréthanne.

7. Sonde d'insémination selon la revendication 1, caractérisée en ce que les parois du conduit sont, en section longitudinale, arrondies depuis l'extrémité du tube jusqu'à l'extrémité libre du tampon.

8. Sonde d'insémination selon la revendication 1, caractérisée en ce que la zone rétrécie a une section droite circulaire ayant un diamètre d'environ 3 mm.

9. Sonde d'insémination selon l'une quelconque des revendications 1 à 8, caractérisée en ce que la matière thermoplastique du tube (24) est biodégradable.

10. Sonde d'insémination selon l'une quelconque des revendications 1 à 9, caractérisée en ce que le tampon (25) présente une longueur d'une trentaine de millimètres et un diamètre extérieur d'une vingtaine de millimètres.

11. Sonde d'insémination selon l'une quelconque des revendications 1 à 10, caractérisée en ce que le tampon (25) comporte à mi-longueur une gorge périphérique de section semi-circulaire.

12. Sonde d'insémination selon la revendication 11, caractérisée en ce que la gorge a un diamètre d'environ 5 mm.

13. Sonde d'insémination selon l'une quelconque des revendications 1 à 12, caractérisée en ce que le tampon (25) entoure le tube (24) sur une vingtaine de millimètres à l'extrémité de celui-ci.

14. Sonde d'insémination selon l'une quelconque des revendications 1 à 13, caractérisée en ce que le tube (24) a un diamètre extérieur d'environ 7 mm et un diamètre intérieur d'environ 5 mm.

15. Sonde d'insémination selon l'une quelconque des revendications 1 à 14, caractérisée en ce que le tampon (25) dépasse l'extrémité du tube (24) d'une dizaine de millimètres.

## Claims

1. An insemination probe for artificial animal insemination, formed by a tube (24) of semi-rigid thermoplastic material carrying at one of its ends a pad (25) of flexible foam of a rotationally symmetrical shape, said pad (25) comprising a conduit passing through it longitudinally from one side to the other, characterised in that the tube (24) is accommodated in said conduit over a part of its length and that said conduit comprises a constricted zone (26) in its part beyond the tube (24).

2. An insemination probe according to claim 1 characterised in that the conduit is straight and prolongs the tube (24) on the longitudinal axis thereof.

3. An insemination probe according to one of claims 1 and 2 characterised in that the pad (25) is moulded on to an end of the tube (24) around said end.

4. An insemination probe according to any one of claims 1 to 3 characterised in that the pad has its free end frustoconical.

5. An insemination probe according to claim 4 characterised in that the frustoconical end has an angle at the apex of about 90°.

6. An insemination probe according to any one of claims 1 to 5 characterised in that the flexible foam of the pad is polyurethane foam.

7. An insemination probe according to claim 1 characterised in that the walls of the conduit are rounded in longitudinal section from the end of the tube to the free end of the pad.

8. An insemination probe according to claim 1 characterised in that the constricted zone is of a circular cross-section of a diameter of about 3 mm.

9. An insemination probe according to any one of claims 1 to 8 characterised in that the thermoplastic material of the tube (24) is biodegradable.

10. An insemination probe according to any one of claims 1 to 9 characterised in that the pad (25) is of a length of about thirty millimetres and an outside diameter of about twenty millimetres.

11. An insemination probe according to any one of claims 1 to 10 characterised in that at its mid-length position the pad (25) comprises a peripheral groove of semicircular section.

12. An insemination probe according to claim 11 characterised in that the diameter of the groove is about 5 mm.

13. An insemination probe according to any one of claims 1 to 12 characterised in that the pad (25) surrounds the tube (24) over about twenty millimetres at the end thereof.

14. An insemination probe according to any one of claims 1 to 13 characterised in that the tube (24) is of an outside diameter of about 7 mm and an inside diameter of about 5 mm.

15. An insemination probe according to any one of claims 1 to 14 characterised in that the pad (25) projects beyond the end of the tube (24) by about ten millimetres.

## Patentansprüche

1. Besamungssonde zur künstlichen tierischen Besamung, bestehend aus einem Rohr (24) aus halbhartem thermoplastischem Material, das an einem seiner Enden einen Tampon (25) aus weichem Schaumstoff trägt, der einen Rotationskörper darstellt, wobei der Tampon (25) einen den Tampon von einem zum anderen Teil längs durchsetzenden Kanal umfaßt,
dadurch gekennzeichnet,
daß das Rohr (24) in dem Kanal mir einem Teil seiner Länge sitzt und daß, der Kanal in seinem jenseits des Rohrs (4) gelegenen Teil eine sich verengende Zone (26) aufweist.

2. Besamungssonde nach Anspruch 1, dadurch gekennzeichnet, daß der Kanal geradlinig ist und das Rohr (24) in dessen Längsachse verlängert.

3. Besamungssonde nach Anspruch 1 oder 2, dadurch gekennzeichnet, daß der Tampon (25) um das eine Ende des Rohrs (24) ausgegossen ist.

4. Besamungssonde nach einem der Ansprüche 1 bis 3, dadurch gekennzeichnet, daß der Tampon an seinem freien Ende konisch ausgebildet ist.

5. Besamungssonde nach Anspruch 4, dadurch gekennzeichnet, daß das konische Ende einen Öffnungswinkel an der Spitze von ungefähr 90° aufweist.

6. Besamungssonde nach einem der Ansprüche 1 bis 5, dadurch gekennzeichnet, daß der weiche Schaumstoff des Tampons aus Polyurethanschaum besteht.

7. Besamungssonde nach Anspruch 1, dadurch gekennzeichnet, daß die Wände des Kanals im Längsschnitt vom Ende des Rohrs bis zum freien Ende des Tampons abgerundet sind.

8. Besamungssonde nach Anspruch 1, dadurch gekennzeichnet, daß die verengte Zone einen geraden kreisförmigen Querschnitt mit einem Durchmesser von etwa 3 mm aufweist.

9. Besamungssonde nach einem der Ansprüche 1 bis 8, dadurch gekennzeichnet, daß das thermoplastische Material des Rohrs (24) biologisch abbaubar ist.

10. Besamungssonde nach einem der Ansprüche 1 bis 9, dadurch gekennzeichnet, daß der Tampon (25) eine Länge von etwa 30 mm und einen Außendurchmesser von etwa 20 mm aufweist.

11. Besamungssonde nach einem der Ansprüche 1 bis 10, dadurch gekennzeichnet, daß der Tampon (25) auf der Hälfte seiner Länge eine Randnut mit halbkreisförmigem Querschnitt aufweist.

12. Besamungssonde nach Anspruch 11, dadurch gekennzeichnet, daß die Nut einen Durchmesser von etwa 5 mm aufweist.

13. Besamungssonde nach einem der Ansprüche 1 bis 12, dadurch gekennzeichnet, daß der Tampon (25) das Rohr (24) auf etwa 20 mm an dessen Ende umgibt.

14. Besamungssonde nach einem der Ansprüche 1 bis 13, dadurch gekennzeichnet, daß das Rohr (24) einen Außendurchmesser von ungefähr 7 mm und einen Innendurchmesser von ungefähr 5 mm aufweist.

15. Besamungssonde nach einem der Ansprüche 1 bis 14, dadurch gekennzeichnet, daß der Tampon (25) das Ende des Rohres (24) mit etwa 10 mm überragt.
